(19)

Europäisches
Patentamt
European
Patent Office
Office européen
des brevets

(11) **EP 4 458 869 A1**

(12) **EUROPEAN PATENT APPLICATION**

(43) Date of publication:
**06.11.2024 Bulletin 2024/45**

(21) Application number: **23171382.7**

(22) Date of filing: **03.05.2023**

(51) International Patent Classification (IPC):
***C08F 14/18*** (2006.01)   ***C08F 14/22*** (2006.01)
***C08F 214/22*** (2006.01)   ***C09D 127/16*** (2006.01)
***C09J 127/16*** (2006.01)   ***H01M 4/62*** (2006.01)
***H01M 50/426*** (2021.01)

(52) Cooperative Patent Classification (CPC):
(C-Sets available)
**C08F 214/22; C08F 14/22; C09D 127/16;
C09J 127/16; H01M 4/623; H01M 50/426**   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Arkema, Inc.
King of Prussia, PA 19406 (US)**

(72) Inventors:
• **KHAN, Andrew
KING OF PRUSSIA, 19406 (US)**
• **PETERSON, Brian
KING OF PRUSSIA, 19406 (US)**
• **LIU, Yuanqin
KING OF PRUSSIA, 19406 (US)**

(74) Representative: **Arkema Patent
Arkema France
DRD-DPI
420, rue d'Estienne d'Orves
92705 Colombes Cedex (FR)**

(54) **PROCESS FOR THE PRODUCTION OF POLYVINYLIDENE FLUORIDE COPOLYMERS**

(57)    The present application relates to a copolymer comprising recurring units derived from vinylidene fluoride and recurring units derived from a fluorinated monomer **M1;** said copolymer having a melting temperature Tm defined by the relationship: (160.04 -2.5108*x) - 3 < Tm (°C) < (160.04 - 2.5108*x) + 3 wherein x is the weight content of said fluorinated monomer **M1** based on the total weight of said copolymer; the melting temperature being measured by DSC according to the ASTM E794-06 standard test method. The present application also relates to the use of said composition in various technical fields.

EP 4 458 869 A1

(52) Cooperative Patent Classification (CPC): (Cont.)

C-Sets
**C08F 14/22, C08F 2/30;**
**C08F 214/22, C08F 214/28**

## Description

## Technical Field

The present invention relates to copolymers of vinylidene fluoride and a fluorinated monomer. In particular, the present invention relates to a process for preparing said copolymer. The present invention also relates to the use of said copolymer.

## Background of the invention

Polyvinylidene fluoride (PVDF) is a highly crystalline, chemically resistant engineering thermoplastic fluoropolymer having a typical useful temperature range from -15°C up to 150°C. Although the glass transition temperature (Tg) for PVDF resins, which normally defines low temperature performance, is near -40°C, in practice, the useful low temperature range for PVDF under impact applications is higher than the Tg. PVDF resins becomes increasingly brittle as its glass transition temperature is approached resulting in poor low-temperature impact resistance. PVDF also loses its flexibility and becomes more rigid at these lower temperatures. It is generally recognized that PVDF resin's low temperature usefulness ranges between +5 and -15°C.

Low temperature properties of PVDF can be improved by introducing co-monomers during polymer synthesis, to form PVDF copolymers. Copolymers of VDF and perfluoroalkyl vinyl ether (PAVE) have been synthesized as curable elastomers (US 3,136,745) showing good low-temperature performance. Copolymers of vinylidene fluoride (VDF) and hexafluorpropylene (HFP) are shown in US 4,076,929 and US 4,569,978 to provide better low temperature performance. These copolymers are formed by adding the comonomer either to the initial charge, or at a constant level in a continuous mixed monomer feed to form random copolymers. The problem with these better low-temperature impact PVDF copolymers is that they also have significantly lower melting temperatures than PVDF homopolymers, reducing their useful temperature range.

One method used to optimize PVDF copolymer properties is to make a copolymer by altering the monomer feed during the polymerization, forming an initial polymer that is high in VDF monomer units, generally above 90 wt% VDF, then adding a co-monomer to the reactor at a point well into the polymerization to produce a copolymer. The VDF-rich polymer and copolymer, if properly selected and in sufficient quantity, will form distinct phases, resulting in an intimate heterogeneous copolymer. A heterogeneous PVDF copolymer is one having two (or more) distinct phases, with a polyvinylidene fluoride rich phase, and a PVDF copolymer phase that is comonomer-rich. These phases can form as a non-continuous structure (having discrete rubber domains). For example, US20200407543 discloses a heterogeneous composition comprising two or more distinct phases. Alternatively, heterogeneous copolymer having co-continuous phases, i.e. having two (or more) continuous phases that are intimately intertwined with each other and cannot be physically separated, can be produced. For example, US 10,570,230 discloses a heterogeneous copolymer composition comprising two or more co-continuous phases wherein said co-continuous phases comprise: a) from 25 to 50 weight percent of a first co-continuous phase comprising 90 to 100 weight percent of vinylidene fluoride monomer units and 0 to 10 weight percent of other fluoromonomer units, and b) from greater than 50 weight percent to 75 weight percent of a second co-continuous phase comprising from 65 to 95 weight percent of vinylidene fluoride monomer units and an effective amount of one or more comonomers selected from the group consisting of hexafluoropropylene and perfluoroalkylvinyl ether to cause the second co-continuous phase to phase separate from the first continuous phase ; wherein the heterogeneous copolymer composition comprises a melting point from 150°C and 175°C.

However, there is still a need for PVDF polymers having a combination of a high melting point for good melt processing, improved low temperature properties and improved dry adhesion. The aim of the present invention is to provide a composition having reasonable swelling and high melting point in order to increase dry adhesion and therefore to improve production efficiency. Surprisingly, it has now been found a process for producing copolymer, wherein the copolymer shows a good compromise between melt processability and reasonable swelling.

## Summary of the invention

In a first aspect, the present invention provides a copolymer comprising recurring units derived from vinylidene fluoride and recurring units derived from a fluorinated monomer **M1**; said copolymer having a melting temperature **Tm** defined by the relationship:

$$(160.04 - 2.5108*x) - 3 < Tm\ (°C) < (160.04 - 2.5108*x) + 3$$

wherein x is the weight content of said fluorinated monomer **M1** based on the total weight of said copolymer; the melting temperature being measured by DSC according to the ASTM E794-06 standard test method.

In a preferred embodiment, the weight content of said fluorinated monomer **M1** is from 1wt% to 66wt% based on the total weight of the copolymer, preferably from 2wt% to 60wt% based on the total weight of the copolymer, in particular from 2wt% to 40wt% based on the total weight of the copolymer.

In a preferred embodiment, said fluorinated monomer **M1** is selected from the group consisting of hexafluoropropene, tetrafluoroethylene, chlorotrifluoroethylene, vinyl fluoride, pentafluoropropene, tetrafluoropropene, trifluoroethylene, perfluoromethyl vinyl ether, perfluoroethyl vinyl ether, perfluoropropyl vinyl ether; preferably said fluorinated monomer is hexafluoropropene.

In a preferred embodiment, said copolymer comprises recurring units derived from a hydrophilic monomer **M2** of formula $R^1R^2C=C(R^3)C(O)R$ (I) wherein $R^1$, $R^2$ and $R^3$ are independently selected from the group consisting of H and $C_1$-$C_5$ alkyl ; R is selected from the group consisting of - $NHC(CH_3)_2CH_2C(O)CH_3$, -NR'R"or -OR' wherein R' and R" are independently selected from the group consisting of H and $C_1$-$C_{18}$ alkyl groups, optionally substituted by one or more hydroxyl, thiol or amino functional group(s) or a five- to six-membered heterocycle comprising at least one nitrogen atom in the ring.

In a preferred embodiment, said copolymer comprises recurring units derived from a monomer bearing a functional group selected from the group consisting of carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic.

In a preferred embodiment, said copolymer is in powder form.

In another aspect, the present invention provides the use of said copolymer as a seed for the preparation of an interpenetrating polymer network.

In another aspect, the present invention provides a process for preparing said copolymer of the present invention, said process comprising the steps of:

    a) Charging to a reactor an initial charge comprising water, surfactant and said fluorinated monomer **M1** and adding vinylidene fluoride to the reactor until the operating pressure is reached ;
    b) Initiating the polymerization by adding an initiator ;
    c) Continuously feeding vinylidene fluoride and optionally the initiator until all the vinylidene fluoride has been added to the reactor to form the copolymer;
    d) Removing the copolymer from the reactor;
    e) Optionally drying the copolymer to form a powder.

In a preferred embodiment, the whole amount of said fluorinated monomer **M1** used in the process is added to the reactor prior to step b).

In a preferred embodiment, said fluorinated monomer **M1** is selected from the group consisting of hexafluoropropene, tetrafluoroethylene, chlorotrifluoroethylene, vinyl fluoride, pentafluoropropene, tetrafluoropropene, trifluoroéthylène, perfluoromethyl vinyl ether, perfluoroethyl vinyl ether, perfluoropropyl vinyl ether, preferably hexafluoropropene.

In a preferred embodiment, a hydrophilic monomer **M2** is added in any one of steps a), b)and/or c), and said hydrophilic monomer **M2** is of formula $R^1R^2C=C(R^3)C(O)R$ (I) wherein $R^1$, $R^2$ and $R^3$ are independently selected from the group consisting of H and $C_1$-$C_5$ alkyl; R is selected from the group consisting of -$NHC(CH_3)_2CH_2C(O)CH_3$, -NR'R"or -OR' wherein R' and R" are independently selected from the group consisting of H and $C_1$-$C_{18}$ alkyl groups, optionally substituted by one or more hydroxyl, thiol or amino functional group(s) or a five- to six-membered heterocycle comprising at least one nitrogen atom in the ring.

In another aspect, the present invention provides an article formed from the copolymer according to the present invention.

In another aspect, the present invention provides a separator for a lithium-ion battery comprising an adhesive layer on at least one side of a porous substrate, wherein the adhesive layer comprises the copolymer according to any one of claims 1 to 6, and optionally inorganic particles.

In another aspect, the present invention provides a positive electrode composition or a negative electrode composition comprising the copolymer according to the present invention.

In another aspect, the present invention provides a coated substrate on which the copolymer according to the present invention is applied as a latex in water or as a solvent solution.

In another aspect, the present invention provides a porous membrane comprising the copolymer according to the present invention applied as a latex in water or as a solvent solution.

**Brief description of the drawings**

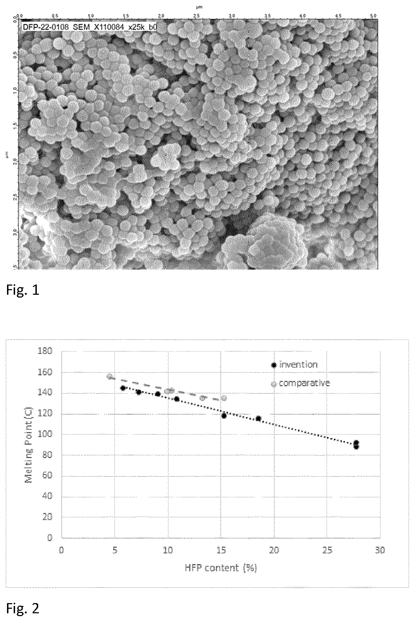

Fig. 1 is a SEM image of the copolymer obtained according to a particular embodiment of the present invention. Fig. 2 is a graph illustrating the behavior of the melting temperature as a function of the content of the fluorinated monomer.

**Detailed description of the invention**

The invention relates to a copolymer comprising recurring units derived from vinylidene fluoride and fluorinated monomer **M1**. The invention also relates to a process for forming the novel copolymer, and uses of the copolymer. Unless otherwise noted, all percentages are weight percentages.

Composition

As mentioned above, in a first aspect of the present invention, a copolymer is provided. In a preferred embodiment, said copolymer comprises at least two different types of recurring units.

The copolymer of the present invention comprises at least recurring units from vinylidene fluoride. The copolymer of the present invention further comprises at least recurring units from a fluorinated monomer **M1**. The fluorinated monomer **M1** is different from vinylidene fluoride. The fluorinated monomer **M1** comprises at least one fluorine atom. The fluorinated monomer **M1** may also comprise bromine, chlorine or iodine atoms.

Hence, the copolymer of the present invention comprises recurring units derived from vinylidene fluoride and recurring units derived from a fluorinated monomer **M1**. Said copolymer has a melting temperature defined by the relationship:

$$(160.04 - 2.5108 * x) - 3 < Tm \, (°C) < (160.04 - 2.5108 * x) + 3$$

wherein x is the weight content of said fluorinated monomer **M1** based on the total weight of said copolymer. The melting temperature is measured by DSC according to the ASTM E794-06 standard test method.

In comparison with other previously known copolymers of vinylidene fluoride/fluorinated monomer, the copolymer according to the present invention offers the following advantages: lower melting temperature allows easier manufacturing for typical molding processes; lower swelling allows the improvement of battery efficiency.

In a preferred embodiment, the weight content of said fluorinated monomer **M1** is from 1 to 66 wt% based on the total weight of the copolymer. Advantageously, the weight content of said fluorinated monomer **M1** is greater than 1%, or greater than 2%, or greater than 3%, or greater than 4%, or greater than 5%, or greater than 6%, or greater than 7%, or greater than 8%, or greater than 9%, or greater than 10%, or greater than 11%, or greater than 12%, or greater than 13%, or greater than 14%, or greater than 15% based on the total weight of the copolymer. Advantageously, the weight content of said fluorinated monomer **M1** is lower than 66%, or lower than 64%, or lower than 62%, or lower than 60%, or lower than 58%, or lower than 56%, or lower than 54% or lower than 52% or lower than 50% or lower than 48% or lower than 46% or lower than 44% or lower than 42% or lower than 40%. In a preferred embodiment, the weight content of the fluorinated monomer in the copolymer of the present invention is in the range of any of the above-mentioned values.

The weight content of said fluorinated monomer **M1** may be from 2 to 66 wt% based on the total weight of the copolymer, or from 2% to 65 wt% based on the total weight of the copolymer, or from 2% to 60 wt% based on the total weight of the copolymer or from 2% to 55 wt% based on the total weight of the copolymer or from 2% to 50 wt% based on the total weight of the copolymer or from 2% to 45 wt% based on the total weight of the copolymer or from 2% to 40 wt% based on the total weight of the copolymer or from 2% to 35 wt% based on the total weight of the copolymer or from 2% to 30 wt% based on the total weight of the copolymer or from 2% to 25 wt% based on the total weight of the copolymer or from 2% to 20 wt% based on the total weight of the copolymer or from 2% to 15 wt% based on the total weight of the copolymer.

The weight content of said fluorinated monomer **M1** may be from 5 to 66 wt% based on the total weight of the copolymer, or from 5% to 65 wt% based on the total weight of the copolymer, or from 5% to 60 wt% based on the total weight of the copolymer or from 5% to 55 wt% based on the total weight of the copolymer or from 5% to 50 wt% based on the total weight of the copolymer or from 5% to 45 wt% based on the total weight of the copolymer or from 5% to 40 wt% based on the total weight of the copolymer or from 5% to 35 wt% based on the total weight of the copolymer or from 5% to 30 wt% based on the total weight of the copolymer or from 5% to 25 wt% based on the total weight of the copolymer or from 5% to 20 wt% based on the total weight of the copolymer or from 5% to 15 wt% based on the total weight of the copolymer.

Alternatively, the weight content of said fluorinated monomer **M1** may be from 10 to 66 wt% based on the total weight of the copolymer, or from 10% to 65 wt% based on the total weight of the copolymer, or from 10% to 60 wt% based on the total weight of the copolymer or from 10% to 55 wt% based on the total weight of the copolymer or from 10% to 50 wt% based on the total weight of the copolymer or from 10% to 45 wt% based on the total weight of the copolymer or from 10% to 40 wt% based on the total weight of the copolymer or from 10% to 35 wt% based on the total weight of the copolymer or from 10% to 30 wt% based on the total weight of the copolymer. Alternatively, the weight content of said fluorinated monomer **M1** may be from 15 to 66 wt% based on the total weight of the copolymer, or from 15% to 65 wt% based on the total weight of the copolymer, or from 15% to 60 wt% based on the total weight of the copolymer or from 15% to 55 wt% based on the total weight of the copolymer or from 15% to 50 wt% based on the total weight of the copolymer or from 15% to 45 wt% based on the total weight of the copolymer or from 15% to 40 wt% based on the total weight of the copolymer.

In a preferred embodiment, the fluorinated monomer **M1** is selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula $CF_2=CFOCF_2CF(CF_3)OCF_2CF_2X$ wherein X is $SO_2F$, $CO_2H$, $CH_2OH$, $CH_2OCN$ or $CH_2OPO_3H$; a monomer of formula $CF_2=CFOCF_2CF_2SO_2F$; a monomer of formula $F(CF_2)nCH_2OCF=CF_2$ wherein n is 1, 2, 3, 4 or 5; a monomer of formula $R^1CH_2OCF=CF_2$ wherein $R^1$ is hydrogen atom or $F(CF_2)m$ and m is 1, 2, 3 or 4; a monomer of formula $R^2OCF=CH_2$ wherein $R^2$ is $F(CF_2)p$ et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof.

The perfluoroalkyl vinyl ethers useful in the invention are those having the structure: $CF_2=CF-O-Rf$, where Rf is one or more perfluoroalkyl groups selected from $-CF_3$, $-CF_2CF_3$, and $-CF_2CF_2CF_3$. A preferred perfluoroalkyl vinyl ether is perfluoromethyl vinyl ether.

Among trifluoropropene, 3,3,3-trifluoropropene is preferred. Among tetrafluoropropene, 2,3,3,3-tetrafluoropropene and 1,3,3,3-tetrafluoropropene are preferred. Among pentafluoropropene, 1,1,3,3,3-pentafluoropropène and 1,2,3,3,3-pentafluoropropene are preferred. Chlorofluoroethylene refers to 1-chloro-1-fluoroethylene or 1-chloro-2-fluoroethylene; 1-chloro-1-fluoroethylene is preferred. Chlorotrifluoropropene refers to 1-chloro-3,3,3-trifluoropropene or 2-chloro-3,3,3-trifluoropropene.

Preferably, the fluorinated monomer **M1** is selected from the group consisting of hexafluoropropene, tetrafluoroethylene, chlorotrifluoroethylene, vinyl fluoride, pentafluoropropene, tetrafluoropropene, trifluoroethylene and perfluoroalkyle vinyl ethers, or mixtures thereof.

More preferably, said fluorinated monomer **M1** is selected from the group consisting of hexafluoropropene, tetrafluoroethylene, chlorotrifluoroethylene, vinyl fluoride, pentafluoropropene, tetrafluoropropene, trifluoroethylene, perfluoromethyl vinyl ether, perfluoroethyl vinyl ether and perfluoropropyl vinyl ether; or mixtures thereof.

In particular, said fluorinated monomer **M1** is selected from the group consisting of hexafluoropropene, perfluoromethyl vinyl ether, perfluoroethyl vinyl ether and perfluoropropyl vinyl ether, or mixtures thereof. More particularly, said fluorinated monomer **M1** is selected from the group consisting of hexafluoropropene and perfluoromethyl vinyl ether, or mixtures thereof.

In a preferred embodiment, the fluorinated monomer **M1** is hexafluoropropene.

In a preferred embodiment, the weight content of recurring units derived from vinylidene fluoride is from 40 to 99 wt.% based on the total weight of said composition, preferably from 50 to 90 wt.% based on the total weight of said composition.

In a preferred embodiment, the copolymer has a melt viscosity of 1 to 32 Kpoise as measured according to ASTM method D3835 measured at 232°C and 100 sec$^{-1}$. The higher molecular weight copolymers tend to be tougher and have advantages in low temperature impact, however lower melt viscosity copolymer is useful in some application by allowing for higher speed melt processing. In one embodiment, said copolymer comprises recurring units derived from a hydrophilic monomer **M2** of formula $R^1R^2C=C(R^3)C(O)R$ (I) wherein $R^1$, $R^2$ and $R^3$ are independently selected from the group consisting of H and $C_1$-$C_5$ alkyl ; R is selected from the group consisting of - $NHC(CH_3)_2CH_2C(O)CH_3$, $-NR'R''$ or $-OR'$ wherein R' and R'' are independently selected from the group consisting of H and $C_1$-$C_{18}$ alkyl groups, optionally substituted by one or more hydroxyl, thiol or amino functional group(s) or a five- to six-membered heterocycle comprising at least one nitrogen atom in the ring.

In a preferred embodiment, said hydrophilic monomer **M2** is of formula $R^1R^2C=C(R^3)C(O)R$ (I) wherein $R^1$, $R^2$ and $R^3$ are independently selected from the group consisting of H and $C_1$-$C_5$ alkyl; R is selected from the group consisting of $-NHC(CH_3)_2CH_2C(O)CH_3$, $-NR'R''$ or OR' wherein R' and R'' are independently selected from the group consisting of H and $C_1$-$C_{15}$ alkyl optionally substituted by one or more hydroxyl, thiol or amino functional group(s) or a five- to six-membered heterocycle comprising at least nitrogen atom in the ring. In a preferred embodiment, said hydrophilic monomer **M2** is of formula $R^1R^2C=C(R^3)C(O)R$ (I) wherein $R^1$, $R^2$ and $R^3$ are independently selected from the group consisting of H and $C_1$-$C_5$ alkyl ; R is selected from the group consisting of - $NHC(CH_3)_2CH_2C(O)CH_3$, -NR'R" or OR' wherein R' and R" are independently selected from the group consisting of H and $C_1$-$C_{10}$ alkyl optionally substituted by one or more hydroxyl, thiol or amino functional group(s) or a five- to six-membered heterocycle comprising at least nitrogen atom in the ring. In a preferred embodiment, said hydrophilic monomer **M2** is of formula $R^1R^2C=C(R^3)C(O)R$ (I) wherein $R^1$, $R^2$ and $R^3$ are independently selected from the group consisting of H and $C_1$-$C_5$ alkyl; R is selected from the group consisting of -OR' wherein R' is selected from the group consisting of H and $C_1$-$C_{10}$ alkyl optionally substituted by one or more -OH functional group(s). In a preferred embodiment, said hydrophilic monomer **M2** is of formula $R^1R^2C=C(R^3)C(O)R$ (I) wherein $R^1$, $R^2$ and $R^3$ are independently selected from the group consisting of H and $C_1$-$C_3$ alkyl; R is selected from the group consisting of -OR' wherein R' is selected from the group consisting of H and $C_1$-$C_{10}$ alkyl optionally substituted by one or more -OH functional group(s). In a more preferred embodiment, said hydrophilic monomer **M2** is of formula $R^1R^2C=C(R^3)C(O)R$ (I) wherein $R^1$, $R^2$ and $R^3$ are independently selected from the group consisting of H and $C_1$-$C_3$ alkyl; R is selected from the group consisting of -OR' wherein R' is selected from the group consisting of H and $C_1$-$C_5$ alkyl optionally substituted by one or more -OH functional group(s). In a preferred embodiment, said hydrophilic monomer **M2** is selected from the group consisting of acrylic acid, methacrylic acid, methyl acrylate, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, 2-hydroxyethyl methacrylate, 2-hydroxypropyl acrylate, 4-hydroxybutyl methacrylate, and combinations thereof. Among these, alkyl acrylates with an alkyl group having from 1 to 8 carbon atoms are preferred, and alkyl acrylates with an alkyl group having from 1 to 5 carbon atoms are more preferable. These compounds may be used alone or as a mixture of two or more. In a more preferred embodiment, said hydrophilic monomer **M2** is selected from the group consisting of acrylic acid, methacrylic acid, methyl acrylate, methyl methacrylate, ethyl acrylate, propyl acrylate, n-butyl acrylate, isobutyl acrylate, t-butyl acrylate, amyl acrylate, isoamyl acrylate, ethyl methacrylate, propyl methacrylate, n-butyl methacrylate, isobutyl methacrylate, t-butyl methacrylate, amyl methacrylate, isoamyl methacrylate, 2-hydroxyethyl methacrylate, 2-hydroxypropyl acrylate, 4-hydroxybutyl methacrylate, and combinations thereof ; in particular selected from the group consisting of acrylic acid, methacrylic acid, methyl acrylate, methyl methacrylate, ethyl acrylate, propyl acrylate, ethyl methacrylate, propyl methacrylate, 2-hydroxyethyl methacrylate, 2-hydroxypropyl acrylate, 4-hydroxybutyl methacrylate, and combinations thereof.

In another embodiment, said copolymer may also comprises recurring units derived from monomers **M3**. Said monomer **M3** may be (A) an alkenyl compound containing a functional group, or (B) an alkenyl compound without a functional group; or mixtures thereof. The alkenyl compound (A) containing a functional group comprises, for example, $\alpha,\beta$-unsaturated carboxylic acids such as acrylic acid, methacrylic acid, fumaric acid, crotonic acid, itaconic acid and the like; vinyl ester compounds such as vinyl acetate, vinyl neodecanoate and the like; amide compounds such as acrylamide, methacrylamide, N-methylacrylamide, N-methylmethacrylamide, N-methylolacrylamide, N-methylolmethacrylamide, N-alkylacrylamide, N-alkylmethacrylamide, N,N-dialkylacrylamide, N,N-dialkylmethacrylamide, diacetone acrylamide and the like; acrylic acid esters such as 2-hydroxyethyl acrylate, N-dialkylaminoethyl acrylate, glycidyl acrylate, n-dodecyl acrylate, fluoroalkyl acrylate and the like; methacrylic acid esters such as dialkylaminoethyl methacrylate, fluoroalkyl methacrylate, 2-hydroxyethyl methacrylate, n-octyl methacrylate, t-butyl methacrylate, glycidyl methacrylate, ethylene glycol dimethacrylate and the like; maleic anhydride, and alkenyl glycidyl ether compounds such as allyl glycidyl ether and the like. Among these, preference is given to acrylic acid, methacrylic acid, itaconic acid, fumaric acid, N-methylolacrylamide, N-methylolmethacrylamide, diacetone acrylamide, 2-hydroxyethyl acrylate, 2-hydroxyethyl methacrylate and allyl glycidyl ether. These compounds may be used alone or as a mixture of two or more. The alkenyl compound without functional group (B) comprises, for example, conjugated dienes such as 1,3-butadiene, isoprene and the like; divinyl hydrocarbon compounds such as divinylbenzene and the like; and alkenyl cyanides such as acrylonitrile, methacrylonitrile and the like. Among these, 1,3-butadiene and acrylonitrile are preferred. These compounds may be used alone or as a mixture of two or more.

In a preferred embodiment, said copolymer may further comprise between 10 ppm and 2 weight % based on the total weight of the copolymer of a surfactant comprising a polyethylene glycol segment and a polypropylene glycol segment. Preferably, said surfactant has a HLB value of 1 to 20, in particular a HLB value from 1 to 5 or from 10 to 15. In particular, the surfactant comprises a polyethylene glycol segment and a polypropylene glycol segment, has a HLB value of 1 to 5 and a weight average molecular weight of from 2500 to 10000 g.mol-1. Alternatively, the surfactant comprises a polyethylene glycol segment and a polypropylene glycol segment, has a HLB value of 10 to 15 and a weight average molecular weight of from 500 to 2500 g.mol-1.

In one embodiment, said copolymer may comprise recurring units derived from a monomer bearing a functional group selected from the group consisting of carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic. The functionality can be introduced for example by means of the transfer agent used during the synthesis process. The transfer agent can be a polymer of molar mass less than or equal to 20 000 g/mol and bearing functional groups chosen from the groups: carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic. One example of a transfer agent of this type is oligomers of acrylic acid. According to a preferred embodiment, the transfer agent is an oligomer of acrylic acid of molar mass less than or equal to 20 000 g/mol.

In a preferred embodiment, said copolymer is in powder form. The average particles size may be from 0.8 $\mu$m to 150 $\mu$m, preferably from 1 $\mu$m to 100 $\mu$m.

## Process for the preparation of the copolymer

In another aspect, a process for preparing a copolymer is provided. The copolymer is conveniently made by an emulsion polymerization process, but could also be synthesized by a suspension, solution, or supercritical CO2 process.

In a preferred embodiment, the process comprises the steps of:

a) Charging to a reactor an initial charge comprising water, surfactant and said fluorinated monomer **M1** and adding vinylidene fluoride to the reactor until the operating pressure is reached ;
b) Initiating the polymerization by adding an initiator ;
c) Continuously feeding vinylidene fluoride and optionally the initiator until all the vinylidene fluoride has been added to the reactor to form the copolymer;
d) Removing the copolymer from the reactor;
e) Optionally drying the copolymer to form a powder.

The fluorinated monomer **M1** is defined above.

In step a) of the present process, the initial charge may also comprise an antifoulant, a buffering agent or a molecular weight regulator in any convenient order.

Surfactants useful in the invention include halogenated and non-halogenated surfactants known to be useful for the (co)polymerization of vinylidene fluoride and perfluoroalkyl vinyl ethers. Examples of useful surfactants are partially fluorinated and perfluorinated carboxylic acid salts, described in US 2,559,752; siloxane surfactants, as described in US6841616B2; 3-allyloxy-2-hydroxy-1-propanesulfonic acid salt surfactant, described in US6869997B2; alkyl sulfonate surfactant, described in US20050239983A1; alkyl phosphonic acid its salts (US 8124694); polyvinyl phosphonic acid, polyacrylic acid and polyvinylsulfonic acid (US 8,697,822); and non-ionic surfactants containing polyethylene glycol, polypropylene glycol and tetramethylene glycol (US 8080621, US 8765890, and US 8158734). In one preferred embodiment, the copolymer formed is fluorosurfactant-free, meaning that no fluoro-surfactants are used in making or processing the polymer. In a preferred embodiment, the surfactant comprises a polyethylene glycol segment and a polypropylene glycol segment. Preferably, said surfactant has a HLB value of 1 to 20, in particular a HLB value from 1 to 5 or from 10 to 15. In particular, the surfactant comprises a polyethylene glycol segment and a polypropylene glycol segment, has a HLB value of 1 to 5 and a weight average molecular weight of from 5000 to 10000 g.mol-1. Alternatively, the surfactant comprises a polyethylene glycol segment and a polypropylene glycol segment, has a HLB value of 10 to 15 and a weight average molecular weight of from 500 to 2500 g.mol-1.

The surfactant charge is from 10 ppm to 2% by weight on the total monomer weight used, and most preferably the surfactant charge is from 100 ppm to 0.2% by weight. Normally the surfactant is added during the initial filling of the reactor, but some portion may also be added after the reaction has begun. Surfactant may also be added as the reaction progresses if needed for further stabilization.

A paraffin antifoulant is optionally used in the polymerization. Any long-chain, saturated, hydrocarbon wax or oil may be used. The oil or wax is added to the reactor prior to formation of fluoropolymer, in an amount sufficient to minimize the formation of polymer adhesions to the reactor components. This amount is generally proportional to the interior surface area of the reactor and may vary from about 1 to about 40 mg/cm2 of reactor interior surface area. If a paraffin wax or hydrocarbon oil is used as the antifoulant, the amount used is typically about 5 mg/cm2 of the reactor interior surface area.

The polymerization reaction mixture may optionally contain a buffering agent to maintain a controlled pH during the polymerization reaction. The pH is typically controlled within the range of from about 3 to about 8, to minimize undesirable color development in the product. The buffering agent may be added all at the beginning, at different points, or throughout the polymerization. Suitable exemplary buffering agents are phosphate buffers and acetate buffers, which are well known in the art.

Molecular weight regulators, also called chain-transfer agents, may optionally be used to adjust the molecular weight profile of the product. They may be added in a single portion at the beginning of the reaction, incrementally, or continuously throughout the reaction. The amount of molecular weight regulator added to the polymerization reaction is typically from about 0.05 to about 5 wt%, more typically from about 0.1 to about 2 wt% based on the total weight of monomer added to the reaction mixture. Oxygenated compounds such as alcohols, carbonates, ketones, esters, and ethers may serve as molecular weight regulators. Examples of suitable oxygenated compounds include isopropyl alcohol, acetone, ethyl acetate, and diethyl carbonate. Other classes of molecular weight regulators include halogenated compounds such as chlorocarbons, hydrochlorocarbons, hydrofluorocarbons, chlorofluorocarbons, and hydrochlorofluorocarbons. Particular examples of halogenated molecular weight regulators include 1-fluoroethane, trichlorofluoromethane, and 1,1-dichloro-2,2,2-trifluoroethane. Some hydrocarbons may be used as molecular weight regulators, such as hydrocarbons that contain two to five carbon atoms, with ethane and propane as particular examples.

Once the reactor is charged with all the starting material in step a), the air may be removed from the reactor. Heat and agitation sufficient to effect polymerization can be provided.

Vinylidene fluoride is provided to the reactor. The reactor is brought to the operating pressure with vinylidene fluoride. The pressure used for polymerization may be selected from a wide range of pressures, from 280 to 20,000 kPa, depending on the capabilities of the reaction equipment, the initiator system chosen, and the monomer composition used. The polymerization pressure is typically from 2,000 to 11,000 kPa, and most typically from 2,750 to 6,900 kPa. The pressure may be adjusted during the reaction to control the process rate and molecular weight profile. The polymerization temperature may vary from 20°C to 160°C, depending on the initiator system chosen, and is typically from 35°C to 130°C, and most typically from 65°C to 95°C. The temperature may also be adjusted during the reaction to control the process rate, initiator efficiency, and product characteristics.

In step b) of the present process, an initiator is added to the reactor. The initiator may be one or a combination of more than one of the initiators known in the art to be useful in the emulsion polymerization of halogenated monomers. Suitable non-limiting classes of initiators include persulfate salts, peroxides, and redox systems. Examples of persulfate salts are sodium persulfate, potassium persulfate, or ammonium persulfate. The amount of persulfate salt added to the reaction mixture based on the total weight of monomer added to the reaction mixture is typically from about 0.005 to about 1.0 wt percent. Organic peroxides that are useful include dialkyl peroxides, alkyl hydroperoxides, peroxy esters, and peroxydicarbonates. A suitable exemplary dialkyl peroxide is di-tert-butyl peroxide. Suitable exemplary peroxy esters include tert-amyl peroxypivalate, tert-butyl peroxypivalate, and succinic acid peroxide. Suitable exemplary peroxydicarbonate initiators include di-n-propyl peroxydicarbonate and diisopropyl peroxydicarbonate, which are typically added to the reaction mixture in an amount based on the total weight of monomer added to the reaction mixture of about 0.5 to about 2.5 wt.%.

The initiator may comprise a redox system. By "redox system" is meant a system comprising an oxidizing agent, a reducing agent, and optionally a promoter that acts as an electron transfer medium. The promoter is a component that, in different oxidation states, is capable of reacting with both the oxidant and the reducing agent, thereby accelerating the overall reaction. Oxidizing agents include, for example, persulfate salts; peroxides, such as hydrogen peroxide; hydroperoxides, such as tert-butyl hydroperoxide and cumene hydroperoxide; and oxidizing metal salts such as, for example, ferric sulfate and potassium permanganate. Exemplary reducing agents include sodium formaldehyde sulfoxylate; sodium or potassium sulfite, bisulfite, or metabisulfite; ascorbic acid; oxalic acid; and reduced metal salts. Typical promoters include transition metal salts such as ferrous sulfate. In redox systems, the oxidizing agent and the reducing agent are typically utilized in an amount from about 0.01 to about 0.5 wt.% based on the total weight of monomer added to the reaction mixture. The promoter, if used, is typically employed in an amount from about 0.005 to about 0.025 wt.% based on the total weight of monomer added to the reaction mixture.

In a preferred embodiment, the whole amount of said fluorinated monomer **M1** is added to the reactor before step b). By adding all the fluorinated monomer **M1** before the initiation of the polymerization, the present process allows the preparation of a copolymer having lower melting temperature, higher crystallinity which will swell less in a Li-ion battery.

Vinylidene fluoride is added to the reaction as necessary to maintain reactor pressure. Optionally more initiator can be added, if needed, to keep the reaction going. The mode of initiator addition depends on the initiator used, the reaction temperature, and the molecular weight characteristics desired.

The amount of fluorinated monomer **M1** that is fed to the reactor is an amount that will yield a copolymer as defined above.

The copolymer formed by the process of the invention has a unique morphology, and composition, providing a useful combination of properties.

The higher level of fluorinated monomer **M1** added upfront provides better reasonable swelling and improved adhesion than when the fluorinated monomer **M1** is added at a latter point in the polymerization. The copolymer of the present invention has a lower melting point than other copolymers produced by adding the fluorinated monomer at a latter point in the polymerization process.

As detailed above, the copolymer of the present invention produced by the present process may also contain recurring units derived from monomers **M2** or **M3** defined above. Said monomers **M2** and **M3** may be added in steps a), b) and/or c).

**Uses**

In another aspect of the present invention, an article formed from the copolymer according to the present invention is provided. The unique properties of the copolymer of the invention make them especially useful in several final applications. These include but are not limited to the wire & cable market, oil & gas market, and the food and beverage tubing market. The copolymer of the invention can be formulated with additives commonly used in polymer compounding for specific end uses, including but not limited to, plasticizers, antioxidants, flame retardants, fillers, fibers, thermal stabilizers, waxes, lubricants, metal oxides, colorants, conductive fillers, antistatics, and antimicrobial agents.

In a preferred embodiment, said article is selected from the group consisting of jacketing, primary layer, buffer layer or strength member for a wire or cable, a filtration membrane, a battery separator or electrode, a protection or adhesive layer for electrode; a foamed article; a tube, film, sheet, rod or fiber; a gasket; an umbilical or riser for oil and gas applications; an oil and gas tank liners, a tubing, bags or containers for sterile uses, pharmaceutical production and distribution, food and beverage contact, and biological applications; corrosion resistant powder coatings for metal substrates, extruded sheet linings for tank fabrication on metal or as dual laminate and products produced using articles mentioned herein.

In particular, a separator for a lithium ion battery is provided. In particular, the separator for a lithium-ion battery comprises an adhesive layer on at least one side of a porous substrate, wherein the adhesive layer comprises the copolymer according to the present invention or the interpenetrated polymer network according to the present invention. The expression interpenetrated polymer network preferably encompasses a semi-interpenetrating polymer network defined as a polymer comprising one or more polymer networks and one or more linear or branched polymers characterized by the penetration on a molecular scale of at least one of the networks by at least some of the linear or branched macromolecules.

In one embodiment, the adhesive layer comprises 50 to 99 weight percent of inorganic particles, based on the combined weight of polymer and inorganic particles. Preferably, said inorganic particles are selected from the group consisting of $BaTiO_3$, $Pb(Zr,Ti)O_3$, $Pb_{1-x}La_xZr_yO_3$ (0<x<1, 0<y<1), $PBMg_3Nb_{2/3})_3$, $PbTiO_3$, hafnia (HfO ($HfO_2$), $SrTiO_3$, $SnO_2$, $CeO_2$, MgO, NiO, CaO, ZnO, $Y_2O_3$, boehmite (y-AlO(OH)), $Al_2O_3$, $TiO_2$, SiC, $ZrO_2$, boron silicate, $BaSO_4$, nanoclays, or mixtures thereof. Preferably, the thickness of the adhesive layer over at least one side of the porous substrate is from 0.5 to 10 micrometres.

The porous substrate may take the form of a membrane or of a fibrous fabric. When the porous substrate is fibrous, it may be a nonwoven web forming a porous web, such as a web obtained by direct spinning or melt blowing (of spun bond or melt blown type).

Examples of porous substrates comprise, without being limited thereto: polyolefins, polyethylene terephthalate, polybutylene terephthalate, polyester, polyacetal, polyamide, polycarbonate, polyimide, polyether ether ketone, polyether sulfone, poly(phenylene oxide), poly(phenylene sulfide), polyethylene naphthalate, or mixtures thereof. However, other engineering plastics that are resistant to heat may be used, without particular limitation. Non-woven materials made of natural or synthetic materials may also be used as the substrate of the separator. The porous substrate generally has a thickness of from 1 to 50 $\mu$m, typically being membranes obtained by extrusion and drawing (wet or dry processes) or cast nonwovens. The porous substrate preferably has a porosity of between 5% and 95%. The average size of the pores (diameter) is preferably between 0.001 and 50 $\mu$m, more preferably between 0.01 and 10 $\mu$m.

Alternatively, the copolymer of the present invention can be used as binder in a positive or negative electrode.

In another aspect of the present invention, an electrode composition is provided. The electrode composition comprises the copolymer of the present invention, conductive agents and an active material.

The conductive agents is preferably selected from the group consisting of carbon blacks, such as acetylene black, Ketjen black; carbon fibers, such as carbon nanotube, carbon nanofiber, vapor growth carbon fiber; metal powders such as SUS powder, and aluminum powder; or mixtures thereof.

When the electrode is a positive electrode, the active material is preferably selected from the group consisting of lithium-salts of transition metal oxides, sulfides, phosphate and hydroxides. Preferably, said active material is selected from the group consisting of a lithium metal phosphate having a composition represented by $LiMPO_4$, M representing Fe, Mn, Co, or Ni, $LiCoO_2$, $LiNi_xCo_{1-x}O_2$, $LiMn_2O_2$, $LiNiO_2$, $LiNi_xCo_yMn_zO_m$, $LiNi_xCo_yAl_zO_m$ and $LiNi_xMn_yAl_zO_m$ where x+y+z =1 and m is an integer representing the number of oxygen atom in the oxide to provide an electron-balanced molecule. More preferably, said active material is selected from the group consisting of $LiFePO_4$ and $LiNi_xCo_yMn_zO_m$ wherein x is greater than or equal to 0.6, y is lower than or equal to 0.2, z is greater than or equal to 0.2, and x+y+z =1 and m is an integer representing the number of oxygen atom in the oxide to provide an electron-balanced molecule. In particular, said active material is selected from the group consisting of $LiFePO_4$ and $LiNi_xCo_yMn_zO_m$ wherein x is greater than or equal to 0.8, y is lower than or equal to 0.1, z is greater than or equal to 0.1, and x+y+z =1 and m is an integer representing the number of oxygen atom in the oxide to provide an electron-balanced molecule When the electrode is a negative electrode, the active material is preferably selected from the group consisting of carbon-based material such as graphite-based carbon, coke-based carbon and hard carbon, silicon, lithium alloy, metallic oxide, alloy of silicon and

$Li_4TiO_{12}$.

The electrode composition may further comprise a solvent such as water or an organic solvent. The organic solvent is preferably selected from the group consisting of n-methylpyrrolidone (NMP), dimethylsulfoxide (DMSO), N,N-dimethylformamide (DMF), triethylphosphite (TEP), acetone, cyclopentanone, tetrahydrofuran, methyl ethylketone (MEK), methyl isobutyl ketone (MiBK), ethyl acetate (EA), butyl acetate (BA), ethylene carbonate (EC), propylene carbonate (PC), dimethyl carbonate (DMC), diethyl carbonate (DEC), ethyl methyl carbonate (EMC), gamma-butyrolactone and N-butylpyrrolidone ; and combinations thereof.

The electrode composition is usually prepared by mixing the components, i.e. copolymer, the active material, the conductive agent and optionally the solvent. When the components are mixed in the presence of an organic solvent, the copolymer is preferably in a powder form.

In another aspect of the present invention, an electrode is provided. Said electrode comprises a current collector and said electrode composition according to the present invention disposed on at least one surface on said current collector. Once said electrode composition is disposed on at least one surface on said current collector, the electrode is dried to remove the organic solvent or water. According to a preferred embodiment, after evaporation of the organic solvent or water, the electrode composition cast on the current collector has the following mass composition:

a. 80% to 99.9% active material, preferably 80% to 99%,
b. 0.05% to 10% conductive agent, preferably 10% to 0.5%,
c. 0.05% to 10% copolymer of the present invention, preferably 10% to 0.5% ; the sum of all these percentages being 100%.

The present invention also provides a Li-ion secondary battery. Said Li-ion secondary battery comprises a negative electrode, a positive electrode according to the present invention and a separator between the negative electrode and the positive electrode. Alternatively, said Li-ion secondary battery comprises a negative electrode according to the present invention, a positive electrode and a separator between said negative electrode and said positive electrode.

In another aspect of the present invention, an electrochemical device is provided. Said electrochemical device comprises a negative electrode, a positive electrode according to the present invention and an electrolyte comprising lithium. Alternatively, said electrochemical device comprises a negative electrode according to the present invention, a positive electrode and an electrolyte comprising lithium.

## Examples

The SEM images provided have been produced using samples prepared after a solvent extraction process for removal of the rubber phase. In all these images, being viewed is what remains after removal of the rubber phase from the solvent extraction process. The steps involved in preparing the samples is described as follows:

a. Cutting a solid polymer sample with a band saw (Southbay Technologies, model 865) into rectangular pieces, 8 to 12 mm long, and with lateral dimensions of 2 to 3 mm
b. Placing the polymer sample into the sample holder (Boeckeler Instruments) of a microtome instrument.
c. Cut the sample top into a four sided pyramid with an apex to base distance of 3 to 5 mm using a glass knife (Alkar, Sweden).
d. Cryomicrotoming the sample using a Cryomicrotome instrument (Boeckeler Instruments, Powertome CRX with CRX cryomicrotome unit) using glass and diamond knives at -120 degrees centigrade A glass knife is used to make parallel slices from the sample apex down to 0.5 to 0.8 mm below the apex (1 to 10 micrometer slices) followed by a diamond knife (Diatome, model histo-cryo) used to remove two 1 micrometer thick slices, two 250 nm thick slices, and one 100 nm thick slice.
e. The sample is taken out of the microtome holder and allowed to dry at room temperature until water condensation is no longer visible and is then immersed into acetone for 10 hours at room temperature using a suitable glass vessel.
f. After 10 hours of immersion, the sample is taken out of the acetone solution and left to dry at room temperature for one hour before SEM analysis.

Melting temperature: Polymer melting points were determined by differential scanning calorimetry (DSC) following the procedure detailed in ASTM E794-06 2018. Resin samples were heated, cooled, and reheated at 10 degrees centigrade /min from -20 degrees centigrade to 210 degrees centigrade. The melting point was taken to be the peak temperature value of the melting transition during the second heating cycle.

NMR Analysis: Copolymer compositions were determined by 19F NMR by first dissolving the resin sample in a solvent mixture of triethylphosphite and tetrahydrofuran-d8. Solution 19F NMR spectra were acquired at 50 degrees centigrade on a Bruker AV III HD 500 MHz spectrometer (11.7 T) equipped with a 5 mm 1H/19F/13C TXO probe. From the spectra, the molar ratios of HFP and VDF were then determined by comparing the integrals of the CF3 and CF2 signals. Weight fractions were then calculated by multiplying the molar ratios by the respective monomer molecular weights.

Melt viscosity: The melt viscosity is measured according to ASTM method D3835 measured at 232°C and 100 sec$^{-1}$.

Example 1

To a 2 gallon autoclave, 4000g of deionized water and 2.0g surfactant (Pluronic 31R1) was charged. The contents of the autoclave were freed of oxygen by pressurizing to 60 psig with nitrogen and agitating at 60 rpm followed by venting to atmospheric pressure. This purging sequence was performed three times. Following, the reactor was sealed, agitated, and heated to 100°C. The reactor was then charged with 222g hexafluoropropylene (HFP). Next, the reactor was pressurized to 650 psig with vinylidene fluoride (VDF). A feed of 1.0wt% potassium persulfate (KPS) and 1.0wt% sodium acetate trihydrate (SAT) was started at 240mL/hr. Upon pressure drop, vinylidene fluoride was fed to the reactor at a rate necessary to maintain pressure at 650psig throughout the reaction. Once VDF feed rose to 1000 mL/hr, the KPS/SAT feed was decreased to 100 mL/hr, then to 50 mL/hr, then 25 mL/hr. KPS/SAT feed rates were selected to maintain steady feed of VDF around 1000/mL hr. Once 1679g VDF was fed, the VDF feed was stopped. KPS and SAT feed was continued at 25 mL/hr for an additional 40 minutes. The reactor was cooled to 75°C and vented to atmospheric pressure. Following venting, the reactor was cooled to room temperature and the product was discharged from the reactor. The product was directly spray dried with a 160°C inlet temperature and 90°C outlet temperature. The HFP content in the product is 9.1 wt.%. The melting point is 138.7°C.

Example 2

To a 2 liter autoclave, 1000g of deionized water and 0.6g surfactant (Pluronic 31R1) was charged. The contents of the autoclave were freed of oxygen by pressurizing to 60 psig with nitrogen and agitating at 60 rpm followed by venting to atmospheric pressure. This purging sequence was performed three times. Following, the reactor was sealed, agitated at 72rpm, and heated to 100C. The reactor was then charged with 90g hexafluoropropylene (HFP). Next, the reactor was pressurized to 650 psig with vinylidene fluoride (VDF). A feed of 1.0wt% potassium persulfate (KPS) and 1.0wt% sodium acetate trihydrate (SAT) was started at 180mL/hr. Upon pressure drop, vinylidene fluoride was fed to the reactor at a rate necessary to maintain pressure at 650psig throughout the reaction. Once pressure drop occurred, the KPS/SAT feed was decreased to maintain steady feed of VDF around 100-300/mL hr. Once 360g VDF was fed, the VDF feed was stopped. KPS and SAT feed was continued at 20mL/hr for an additional 31 minutes. The reactor was cooled to 30°C and vented to atmospheric pressure. Following venting, the product was discharged from the reactor. The product was oven dried at 60°C.

Example 3

To a 2 liter autoclave, 1000g of deionized water and 0.6 g surfactant (Pluronic 31R1) was charged. The contents of the autoclave were freed of oxygen by pressurizing to 60 psig with nitrogen and agitating at 60 rpm followed by venting to atmospheric pressure. This purging sequence was performed three times. Following, the reactor was sealed, agitated at 72rpm, and heated to 100C. The reactor was then charged with 134g hexafluoropropylene (HFP). Next, the reactor was pressurized to 650 psig with vinylidene fluoride (VDF). A feed of 1.0wt% potassium persulfate (KPS) and 1.0wt% sodium acetate trihydrate (SAT) was started at 180mL/hr. Upon pressure drop, vinylidene fluoride was fed to the reactor at a rate necessary to maintain pressure at 650psig throughout the reaction. Once pressure drop occurred, the KPS/SAT feed was decreased to maintain steady feed of VDF around 100-300/mL hr. Once 315g VDF was fed, the VDF feed was stopped. KPS and SAT feed was continued at 40mL/hr for an additional 35 minutes. The reactor was cooled to 30°C and vented to atmospheric pressure. Following venting, the product was discharged from the reactor. The product was oven dried at 60°C.

Example 4

To a 2 liter autoclave, 1000g of deionized water and 0.6g surfactant (Pluronic 31R1) was charged. The contents of the autoclave were freed of oxygen by pressurizing to 60 psig with nitrogen and agitating at 60 rpm followed by venting to atmospheric pressure. This purging sequence was performed three times. Following, the reactor was sealed, agitated at 72rpm, and heated to 100C. The reactor was then charged with 179g hexafluoropropylene (HFP). Next, the reactor was pressurized to 650 psig with vinylidene fluoride (VDF). A feed of 1.0wt% potassium persulfate (KPS) and 1.0wt% sodium acetate trihydrate (SAT) was started at 180mL/hr. Upon pressure drop, vinylidene fluoride was fed to the reactor at a rate necessary to maintain pressure at 650psig throughout the reaction. Once pressure drop occurred, the KPS/SAT feed was decreased to maintain steady feed of VDF around 100-300/mL hr. Once 270g VDF was fed, the VDF feed was stopped. KPS and SAT feed was continued at 60mL/hr for an additional 28 minutes. The reactor was cooled to 30°C and vented to atmospheric pressure. Following venting, the product was discharged from the reactor. The product was oven dried at 60°C.

Table 1 below lists the data obtained for the product prepared in examples 2-4

Table 1

| Example | HFP content (by NMR) | Melt viscosity (kP, 100s-1) | Melting point (°C) |
|---|---|---|---|
| Example 2 | 18.5 wt% | 20.80 | 115.7°C |
| Example 3 | 27.7 wt% | 9.60 | 92.2°C |
| Example 4 | 39.1 wt% | 5.83 | 62°C |

**Claims**

1. A copolymer comprising recurring units derived from vinylidene fluoride and recurring units derived from a fluorinated monomer **M1**; said copolymer having a melting temperature **Tm** defined by the relationship:

$$(160.04 - 2.5108 * x) - 3 < Tm \ (°C) < (160.04 - 2.5108 * x) + 3$$

wherein x is the weight content of said fluorinated monomer **M1** based on the total weight of said copolymer; the melting temperature being measured by DSC according to the ASTM E794-06 standard test method.

2. The copolymer according to the previous claim wherein the weight content of said fluorinated monomer **M1** is from 1wt% to 66wt% based on the total weight of the copolymer, preferably from 2wt% to 60wt% based on the total weight of the copolymer, in particular from 2 to 40wt% based on the total weight of the copolymer.

3. The copolymer according to any one of the previous claims wherein said fluorinated monomer **M1** is selected from the group consisting of hexafluoropropene, tetrafluoroethylene, chlorotrifluoroethylene, vinyl fluoride, pentafluoropropene, tetrafluoropropene, trifluoroethylene, perfluoromethyl vinyl ether, perfluoroethyl vinyl ether, perfluoropropyl vinyl ether; preferably said fluorinated monomer **M1** is hexafluoropropene.

4. The copolymer according to any one of the previous claims further comprising recurring units derived from a hydrophilic monomer **M2** of formula $R^1R^2C=C(R^3)C(O)R$ (I) wherein $R^1$, $R^2$ and $R^3$ are independently selected from the group consisting of H and $C_1$-$C_5$ alkyl ; R is selected from the group consisting of $-NHC(CH_3)_2CH_2C(O)CH_3$, $-NR'R"$or $-OR'$ wherein R' and R" are independently selected from the group consisting of H and $C_1$-$C_{18}$ alkyl groups, optionally substituted by one or more hydroxyl, thiol or amino functional group(s) or a five-to six-membered heterocycle comprising at least one nitrogen atom in the ring.

5. The copolymer according to any one of the previous claims further comprising recurring units derived from a monomer bearing a functional group selected from the group consisting of carboxylic acid, carboxylic acid anhydride, carboxylic acid ester, epoxy groups, amide, hydroxyl, carbonyl, mercapto, sulfide, oxazoline, phenolic, ester, ether, siloxane, sulfonic, sulfuric, phosphoric or phosphonic.

6. The copolymer according to any one of the previous claims wherein said copolymer is in powder form.

7. Use of the copolymer according to any of the previous claims 1 to 6 as a seed for the preparation of an interpenetrating polymer network.

8. A process for preparing the copolymer according to any one of the previous claims 1 to 6, said process comprising the steps of:

   a) Charging to a reactor an initial charge comprising water, surfactant, said fluorinated monomer **M1** and adding vinylidene fluoride to the reactor until the operating pressure is reached;

b) Initiating the polymerization by adding an initiator ;
c) Continuously feeding vinylidene fluoride and optionally the initiator until all the vinylidene fluoride has been added to the reactor to form the copolymer;
d) Removing the copolymer from the reactor;
e) Optionally drying the copolymer to form a powder.

9. A process according to the previous claim wherein the whole amount of said fluorinated monomer **M1** used in the process is added to the reactor prior to step b).

10. A process according to any one of previous claims 8 to 9 wherein said fluorinated monomer **M1** is selected from the group consisting of hexafluoropropene, tetrafluoroethylene, chlorotrifluoroethylene, vinyl fluoride, pentafluoropropene, tetrafluoropropene, trifluoroéthylène, perfluoromethyl vinyl ether, perfluoroethyl vinyl ether, perfluoropropyl vinyl ether, preferably hexafluoropropene.

11. A process according to any one of the previous claims 8 to 10 wherein a hydrophilic monomer **M2** is added in any one of steps a), b) and/or c), and said hydrophilic monomer **M2** is of formula $R^1R^2C=C(R^3)C(O)R$ (I) wherein $R^1$, $R^2$ and $R^3$ are independently selected from the group consisting of H and $C_1$-$C_5$ alkyl; R is selected from the group consisting of-$NHC(CH_3)_2CH_2C(O)CH_3$, -NR'R"or -OR' wherein R' and R" are independently selected from the group consisting of H and $C_1$-$C_{18}$ alkyl groups, optionally substituted by one or more hydroxyl, thiol or amino functional group(s) or a five- to six-membered heterocycle comprising at least one nitrogen atom in the ring.

12. An article formed from the copolymer according to any one of claims 1 to 6.

13. A separator for a lithium-ion battery comprising an adhesive layer on at least one side of a porous substrate, wherein the adhesive layer comprises the copolymer according to any one of claims 1 to 6, and optionally inorganic particles.

14. A positive electrode composition or a negative electrode composition comprising the copolymer according to any one of claims 1 to 6.

15. A coated substrate on which the copolymer according to any one of claims 1 to 6 is applied as a latex in water or as a solvent solution.

16. A porous membrane comprising the copolymer of any one of claims 1 to 6 applied as a latex in water or as a solvent solution.

Fig. 1

Fig. 2

EUROPEAN SEARCH REPORT

Application Number

EP 23 17 1382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 447 214 B2 (AMIN-SANAYEI RAMIN [US]; LIN CAIPING [US]; ARKEMA INC [US]) 20 September 2016 (2016-09-20) * examples * | 1-15 | INV. C08F14/18 C08F14/22 C08F214/22 C09D127/16 |
| X | US 8 809 471 B2 (AMIN-SANAYEI RAMIN [US]; LIN CAIPING [US] ET AL.) 19 August 2014 (2014-08-19) * examples * | 1-3,6,8, 14 | C09J127/16 H01M4/62 H01M50/426 |
| A | US 2017/368731 A1 (DEVISME SAMUEL [FR] ET AL) 28 December 2017 (2017-12-28) * examples 7,8 * | 1-15 | |
| X | US 8 080 621 B2 (AMIN-SANAYEI RAMIN [US]; DURALI MEHDI [US] ET AL.) 20 December 2011 (2011-12-20) * examples * | 1-3,8, 10,12,14 | |
| X | US 11 133 562 B2 (ARKEMA INC [US]) 28 September 2021 (2021-09-28) * examples 2-3 * | 1-16 | TECHNICAL FIELDS SEARCHED (IPC) |
| X | US 2015/030906 A1 (AMIN-SANAYEI RAMIN [US] ET AL) 29 January 2015 (2015-01-29) * examples 2-3 * | 1-16 | C08F C09J H01M C09D |
| X | EP 1 144 469 A1 (ATOFINA CHEM INC [US]) 17 October 2001 (2001-10-17) * page 26; table 2 * | 1-3,6,8 | |

The present search report has been drawn up for all claims

| Place of search | Date of completion of the search | Examiner |
|---|---|---|
| The Hague | 12 October 2023 | Parry, Julian |

EPO FORM 1503 03.82 (P04C01)

## ANNEX TO THE EUROPEAN SEARCH REPORT
## ON EUROPEAN PATENT APPLICATION NO.

EP 23 17 1382

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | Publication date |
|---|---|---|---|---|---|
| US 9447214 | B2 | 20-09-2016 | CN | 103502286 A | 08-01-2014 |
| | | | EP | 2686355 A2 | 22-01-2014 |
| | | | JP | 6124807 B2 | 10-05-2017 |
| | | | JP | 2014508209 A | 03-04-2014 |
| | | | US | 2014005325 A1 | 02-01-2014 |
| | | | WO | 2012125786 A2 | 20-09-2012 |
| US 8809471 | B2 | 19-08-2014 | CN | 103562235 A | 05-02-2014 |
| | | | EP | 2686354 A2 | 22-01-2014 |
| | | | JP | 2014508210 A | 03-04-2014 |
| | | | US | 2013345381 A1 | 26-12-2013 |
| | | | WO | 2012125788 A2 | 20-09-2012 |
| US 2017368731 | A1 | 28-12-2017 | EP | 3237171 A1 | 01-11-2017 |
| | | | FR | 3030528 A1 | 24-06-2016 |
| | | | US | 2017368731 A1 | 28-12-2017 |
| | | | WO | 2016102796 A1 | 30-06-2016 |
| US 8080621 | B2 | 20-12-2011 | CN | 101553528 A | 07-10-2009 |
| | | | EP | 2089463 A1 | 19-08-2009 |
| | | | JP | 5506392 B2 | 28-05-2014 |
| | | | JP | 2010512430 A | 22-04-2010 |
| | | | US | 2007135546 A1 | 14-06-2007 |
| | | | WO | 2008073686 A1 | 19-06-2008 |
| US 11133562 | B2 | 28-09-2021 | AU | 2013337752 A1 | 22-01-2015 |
| | | | AU | 2018201337 A1 | 15-03-2018 |
| | | | BR | 112014032547 A2 | 27-06-2017 |
| | | | CA | 2878079 A1 | 08-05-2014 |
| | | | CN | 104396048 A | 04-03-2015 |
| | | | EP | 2920831 A1 | 23-09-2015 |
| | | | JP | 6656922 B2 | 04-03-2020 |
| | | | JP | 7261726 B2 | 20-04-2023 |
| | | | JP | 2015533453 A | 24-11-2015 |
| | | | JP | 2020038837 A | 12-03-2020 |
| | | | JP | 2022000862 A | 04-01-2022 |
| | | | KR | 20150081412 A | 14-07-2015 |
| | | | MY | 178154 A | 06-10-2020 |
| | | | US | 2015340676 A1 | 26-11-2015 |
| | | | WO | 2014071144 A1 | 08-05-2014 |
| US 2015030906 | A1 | 29-01-2015 | AU | 2013222505 A1 | 28-08-2014 |
| | | | AU | 2017265150 A1 | 14-12-2017 |
| | | | CA | 2865003 A1 | 29-08-2013 |
| | | | CN | 104126239 A | 29-10-2014 |
| | | | CN | 109119575 A | 01-01-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 17 1382

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | Publication date |
|---|---|---|---|---|---|
| | | | EP 2817838 A1 | | 31-12-2014 |
| | | | JP 2015512124 A | | 23-04-2015 |
| | | | JP 2018098212 A | | 21-06-2018 |
| | | | KR 20140135707 A | | 26-11-2014 |
| | | | MY 194697 A | | 15-12-2022 |
| | | | US 2015030906 A1 | | 29-01-2015 |
| | | | WO 2013126490 A1 | | 29-08-2013 |
| EP 1144469 | A1 | 17-10-2001 | CN 1327455 A | | 19-12-2001 |
| | | | EP 1144469 A1 | | 17-10-2001 |
| | | | JP 2003514036 A | | 15-04-2003 |
| | | | JP 2012067324 A | | 05-04-2012 |
| | | | MX PA01006827 A | | 19-08-2004 |
| | | | US 6586547 B1 | | 01-07-2003 |
| | | | WO 0132726 A1 | | 10-05-2001 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3136745 A
- US 4076929 A
- US 4569978 A
- US 20200407543 A
- US 10570230 B
- US 2559752 A
- US 6841616 B2
- US 6869997 B2
- US 20050239983 A1
- US 8124694 B
- US 8697822 B
- US 8080621 B
- US 8765890 B
- US 8158734 B